# DEMANDE DE BREVET EUROPEEN

(11) **EP 1 980 147 A1**
(43) Date de publication de la demande: **15.10.2008**
(21) Numéro de dépôt: 08007204.4
(22) Date de dépôt: 11.04.2008
(51) Int. Cl.: A01G 17/12

(54) **Collier de tuteurage vegetal**

(30) Priorité: 11.04.2007 FR 0702651
(71) Demandeur: Plantco France, 86320 Civaux (FR)
(72) Inventeur: Decazes, Guillaume, 75116 Paris (FR)
(74) Mandataire: Thibon-Littaye, Annick

(57) **Abrégé**

L'invention a pour objet un collier pour lier un végétal à un tuteur. El collier est formé d'une bande flexible (B) dont la face interne (11) destinée à enserrer le végétal comporte une série de protubérances (2) d'appui sur le végétal énserré et dont les faces latérales sont munies de picots latéraux de retenue de la bande (B) dans des moyens appropriés d'un fermoir coopérant (F)::-solidaire de cette dernière. La bande flexible est réalisée en un matériau dont les propriétés mécaniques se dégradent progressivement sous l'effet des intempéries, rendant ainsi le collier ductile et auto-extensible avec la croissance du végétal qu'il enserre.

## Description

La présente invention concerne la conception et la réalisation d'un collier de tuteurage végétal, à savoir un dispositif permettant de lier un végétal à un support tuteur. Elle vise à assurer un soutien efficace du végétal tout au long de sa croissance en le maintenant enserré, par exemple par son tronc principal ou par le tronc d'une branche d'un arbre, dans le même collier que le tuteur, en proposant pour cela un collier simple et peu coûteux, facile à mettre en oeuvre, qui en plus respecte mieux que ses prédécesseurs les conditions que l'on recherche actuellement en matière de qualité de l'environnement tout en s'affranchissant de leurs exigences d'entretien au cours de la croissance du végétal.

Le besoin de soutenir des arbres en les attachant à un tuteur n'est pas nouveau. Des colliers pour ce faire ont notamment été décrits dans le document d'art antérieur FR 2 801 765. Ils se composent essentiellement d'une bande flexible qui est munie de picots s'enclenchant dans un fermoir prévu à l'une des extrémités de la bande pour fermer le collier en boucle autour du végétal à soutenir et de son tuteur.

Le collier suivant l'invention se distingue des colliers de l'art antérieur principalement en ce que la bande flexible est constituée en un matériau dont les propriétés mécaniques se dégradent sous l'effet des intempéries, notamment en termes de résistance à l'élongation, et qui devient ainsi ductile, ce qui rend le collier apte à se déformer en s'allongeant sous une contrainte mécanique telle que celle résultant de la croissance du végétal autour duquel il est disposé, lorsqu'il est utilisé exposé aux intempéries ou à des conditions atmosphériques similaires. De préférence, on choisit un matériau à propriétés hygroscopiques, qui est donc fragilisé sous l'effet des eaux de pluie et d'arrosage. De préférence encore, on choisit un matériau biodégradable, de sorte qu'il n'est alors pas nécessaire de ramasser te collier une fois qu'il a été complètement distendu par les effets conjoints des intempéries et du végétal en croissance et qu'il est tombé à terre.

Secondairement, la bande centrale du collier suivant l'invention se distingue des colliers de tuteurage antérieurement connus en ce qu'elle présente une face interne d'enserrement du végétal qui est pourvue de protubérances venant en appui sur celui-ci, contrairement à une face externe opposée qui est lisse, les picots d'enclenchement dans le fermoir étant quant à eux préférentiellement formés dans la masse de la bande sur les bords latéraux de celle-ci.

On notera qu'à la différence de ce que seraient des crans ou cannelures destinées à coopérer avec le fermoir en s'enclenchant dans des lumières de celui-ci, les protubérances de la face interne du collier suivant l'invention sont avantageusement configurées pour ne pas présenter de zone anguleuse risquant de s'incruster dans l'écorce du végétal au cours de sa croissance. Sous une forme de réalisation préférée, ces protubérances présentent un profil semi-conique dont la section va en décroissant vers l'extrémité libre de la bande (celle qui est à l'opposé du fermoir). On favorise ainsi que le collier glisse sur le végétal enserré, au fur et à mesure de la croissance du végétal et de l'allongement non élastique du collier.

Le fermoir du collier suivant l'invention est avantageusement prévu intégré dans la même matière que la bande flexible, à une extrémité de celle-ci, comme il est d'ailleurs classique en soi. Il est avantageusement nettement plus large que la bande dans sa partie courante avec ses picots latéraux, ce qui lui confère une rigidité moins fragile sous les intempéries, d'autant qu'il n'est pas soumis aux mêmes contraintes en traction au cours de la croissance du végétal.

De préférence, les picots à enclenchement dans le fermoir sont configurés pour régner avec la face externe de la bande centrale, ce qui permet une réalisation uniformément lisse de la bande de ce côté, avec les avantages qui en résultent, notamment vis à vis du ruissellement des eaux de pluie. De préférence encore, ne serait-ce que pour des questions de facilité de fabrication par moulage, ces picots sont ménagés en prolongement de chacune des protubérances de la face interne, symétriquement de chaque côté de la bande,

En moyens coopérants avec de tels picots, le fermoir comporte alors une lumière distale de formé adaptée pour laisser passer librement chaque ensemble d'une protubérance avec les picots associés à travers le fermoir, et cette lumière est prolongée dans l'axe du fermoir par une encoche apte à loger la bande centrale en sa section courante dépourvue de protubérances internes et picots latéraux, sous l'effet de la poussée élastique résultant de la tendance du collier à augmenter le rayon de courbure de la bande.

Dans une forme de réalisation particulièrement avantageuse du point de vue du fonctionnement du collier concernant l'enclenchement des picots dans le fermoir, les picots présentent une face plane transversalement à la direction longitudinale du collier, par laquelle ils peuvent venir en ferme appui sur la face longitudinale du fermoir de part et d'autre de l'encoche recevant la bande elle-même.

En fonctionnement sur un végétal tel un tronc d'arbre, le collier selon l'invention se comporte comme étant doublement auto-extensible de manière à s'allonger en suivant la croissance du végétal qu'il enserre, d'une part quand le collier peut s'agrandir en sautant d'un picot au suivant dans la succession des picots d'enclenchement dans le fermoir, d'autre part et surtout du fait que sa résistance à l'élongation diminue au fur et à mesure que le matériau se dégrade.

Suivant une caractéristique secondaire de l'invention, des moyens de détrompage, qui sont avantageusement prévus au niveau du fermoir, ont pour rôle de guider l'utilisateur à mettre le collier en place correctement, c'est-à-dire avec sa face interne au contact du végétal à soutenir. Dans d'autres cas, une fonction de détrompage similaire pourra être assurée par les instructions d'emploi, ou plutôt par un préformage de la bande du collier lui imposant une amorce de courbure avec sa face interne du côté concave.

Selon une caractéristique secondaire de l'invention, des moyens de détrompage appropriés impliquent une lèvre de verrouillage qui permet de bloquer la bande du collier dans son encoche réceptrice jouxtant la lumière distale du fermoir. Cette lèvre est prévue en travers du collier à la base de l'encoche, sur celles des faces du fermoir qui se trouve le plus à l'extérieur vers l'extrémité libre de la bande centrale une fois que la bande a été engagée à travers la lumière distale du fermoir. Pour coopérer avec une telle lèvre de verrouillage, il est avantageusement ménagé une portée plane se situant au niveau des picots dans le plan longitudinal de la bande en sa face qui se place alors en vis à vis de ladite lèvre.

On a considéré jusqu'à maintenant que le fermoir peut ne comporter qu'une seule lumière, que l'on a qualifiée de distale. Mais dans la plupart des cas d'application pratique, le collier suivant l'invention comportera un fermoir à deux lumières, une lumière dite proximale étant ajoutée en arrière de la lumière distale par rapport à l'extrémité libre de la bande centrale du collier. La présence des deux lumières, de contours symétriquement opposés, notamment semi-circulaires, est utile pour les colliers destinés à s'enrouler en double boucle, d'abord autour du végétal à soutenir jusqu'à traverser le fermoir par la lumière proximale, ensuite autour de son tuteur de la lumière proximale à la lumière distale. La lèvre de verrouillage est disposée sur le fermoir en correspondance avec la forme en 8 du collier, sur la face de la bande qui est la dernière à être traversée par l'extrémité libre du collier, et en travers de l'encoche qui prolonge axialement la lumière distale. A l'inverse, la lumière proximale ne comporte ni lèvre de verrouillage ni encoche pour loger la bande et la retenir par ses picots latéraux. Par contre, la forme non symétrique de la bande entre face externe lisse et face interne munie de protubérances (plus la présence des picots) entraîne une forme complémentaire de la lumière qui oblige l'utilisateur à engager la bande centrale par son extrémité libre à travers la lumière'proximale en la présentant dans le bon sens, celui qui ferme le collier avec sa face interne du côté concave, pour constituer ainsi la face d'enserrement du végétal à soutenir.

D'autres caractéristiques et avantages de l'invention ressortiront plus précisément à la lecture de la description qui suit d'un de ses modes de réalisation préférés, mais non limitatif, en référence aux figures dans lesquelles :

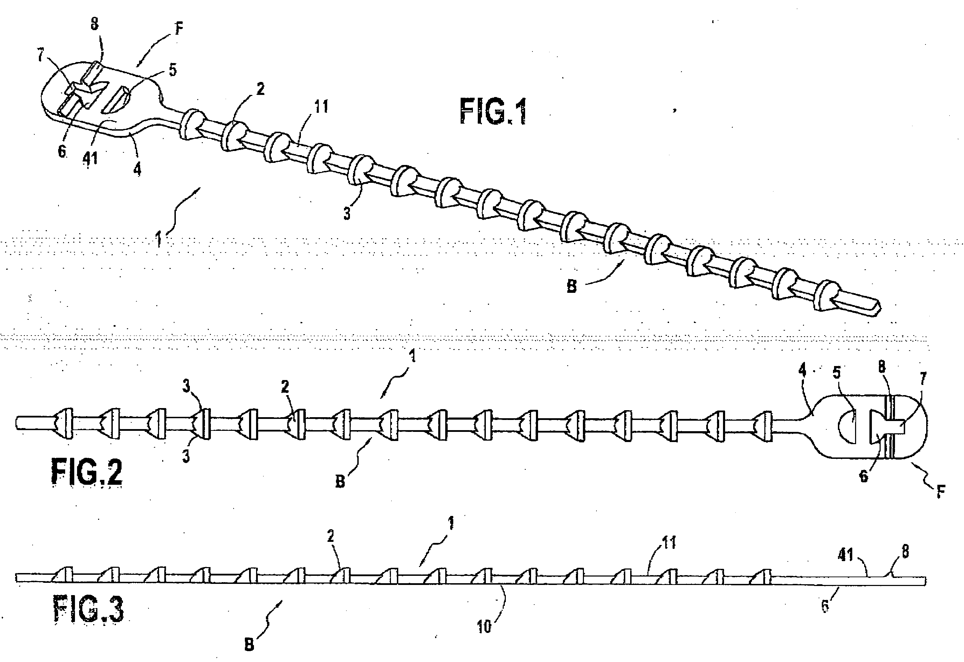

- la figure 1 représente une vue en perspective d'un collier selon l'invention ;
- la figure 2 est une vue de face d'un collier selon l'invention ;
- la figure 3 est une vue longitudinale de profil d'un collier selon l'invention;
- et la figure 4 est une vue schématique en perspective d'un mode de mise en oeuvre préféré d'un collier de tuteurage selon l'invention.

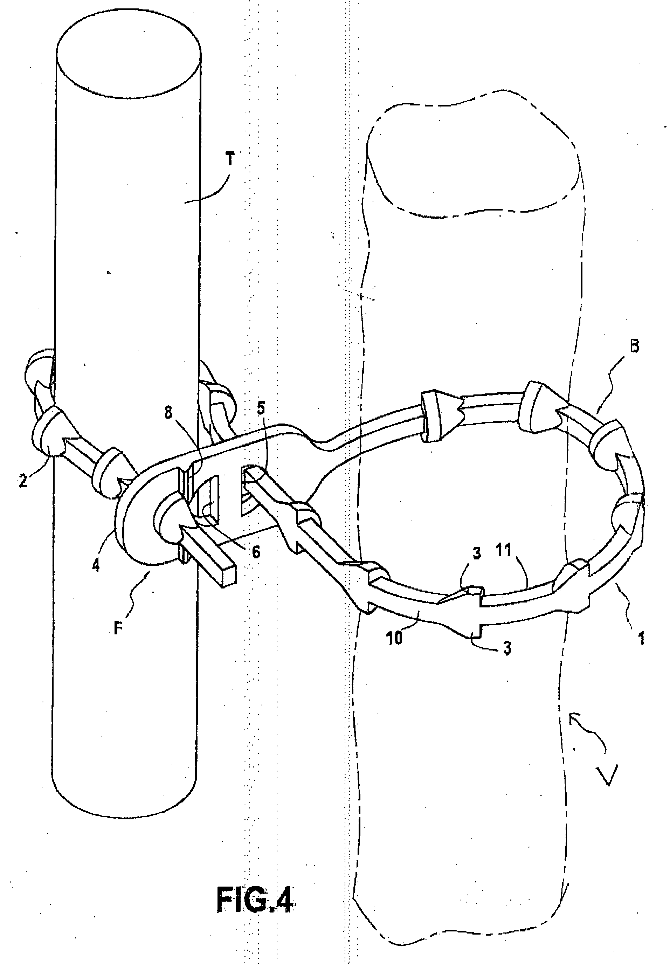

Pour plus de clarté dans l'exposé qui suit, l'invention sera décrite suivant un mode de mise en oeuvre dans lequel le collier de tuteurage 1 qui est son objet est destiné à lier un tronc d'arbre V à un tuteur T planté sensiblement verticalement dans le sol au voisinage de l'arbre à soutenir (voir figure 4). Par ailleurs, en référence aux figures, l'invention sera décrite dans son mode de mise en oeuvre préféré, mais non exclusif, dans lequel le collier est destiné à être placé autour du végétal et de son tuteur T en formant une double boucle (autrement dit une forme en 8) dont une boucle enserre le végétal et dont l'autre boucle enserre le tuteur.

Le collier 1 selon l'invention est formé d'une bande flexible B s'élargissant à l'une de ses extrémités en une plaque sensiblement plane 4, formant un fermoir F, relativement rigide par rapport à elle. A titre d'exemple, le corps continu de la bande centrale présente une épaisseur de 1 à 5 mm et une largeur de 5 à 10 mm, et il est conservé à l'abri de la sécheresse, dans des conditions telles que jusqu'à son emploi il reste capable d'un rayon de plus forte courbure de 2 à 5 cm. Par le choix du matériau le constituant, le collier est prévu pour supporter à l'extérieur des températures pouvant aller de - 20 °C par temps de gel à + 80 °C par temps chaud au soleil.

L'une des faces de la bande B, dite la face externe 10, est plane et lisse, tandis que la face interne opposée 11 comporte, réparties sur sa longueur, un ensemble de protubérances 2 destinées à venir en appui sur le végétal, la face dite interne constituant la face d'enserrement du végétal. Grâce à la présence de ces protubérances, le contact entre le végétal et le collier 1 est un contact réparti en plusieurs points, et non un contact continu. Ceci permet d'éviter toute stagnation d'eau dans la zone de contact du collier avec le végétal, limitant les risques de prolifération d'organismes néfastes au végétal dans cette région. Un tel contact permet également une bonne circulation de l'air, favorable à la bonne santé du végétal.

Chacune des protubérances d'appui 2 est prolongée, sur chaque bord latéral de la bande B, de part et d'autre de celle-ci, par deux picots latéraux 3 dont la forme est adaptée pour qu'ils jouent le rôle de picots s'enclenchant sur le fermoir pour retenir le collier fermé en boucle.

La forme des protubérances 2 complétées par les picots 3 est avantageusement choisie de manière à minimiser encore les risques de blessure du végétal. L'ensemble présente un profil à section semi-circulaire allant en décroissant dans le sens du fermoir vers l'extrémité libre du collier, donc la forme d'une moitié de tronc de cône dont l'axe de révolution est sensiblement confondu avec l'axe longitudinal de la bande B et dont la base est orientée vers le fermoir F.

Selon une caractéristique de l'invention dans son mode de réalisation préféré illustré par les figures, les portions de tronc de cône constituant chacune des protubérances 2 et picots latéraux 3 sont avantageusement prolongées, à partir de leur extrémité de plus grande dimension, par une forme de rondelle de section constante qui permet l'établissement d'un contact localement linéique avec le végétal. Ceci vient augmenter l'aspect non blessant du collier selon l'invention dans son contact avec le végétal, aspect non blessant qui était déjà assuré par la présence des protubérances sur la face interne 11, avec leur pente longitudinale allant en décroissant dans le sens de l'allongement de la bande, à partir du fermoir, donc en direction de l'extrémité libre du collier.

En coopération avec les protubérances de face interne 2 et avec les picots latéraux 3, la fermeture du collier selon l'invention est assurée, au niveau du fermoir F, principalement par la lumière distale 6, son encoche 7 et la lèvre de verrouillage associée 8.

La forme et les dimensions de la lumière distale 6, ou lumière de fermeture, sont complémentaires de celles de la section droite de l'ensemble formé par une protubérance interne 2 et les deux picots latéraux 3 qui lui sont associés de part et d'autre de la bande B. Dans le mode de réalisation de l'invention illustré par les figures, la lumière 6 a donc une forme sensiblement emi-circulaire. L'encoche 7 s'étend axialement à partir du sommet de sa partie courbe. Les dimensions de l'encoche 7, en largeur et en longueur sont légèrement supérieures à la largeur et l'épaisseur de la bande B, en son segment de partie courante entre deux couples de picots latéraux 3 successifs, de sorte que cette dernière s'y loge sans difficulté.

La lèvre de verrouillage 8 s'étend de part et d'autre de l'encoche 7 à l'endroit de son intersection avec la lumière 6. Elle est ménagée en saillie sur la face 41 de la plaque 4 située du côté de la face interne 11 de la bande B. Cette disposition sur la face interne plutôt que sur la face externe est justifiée par le fait que l'on se place dans le cas d'un collier à double boucle, et non pas dans le cas d'un collier qui serait destiné à enserrer le tronc d'arbre dans la même boucle unique que son tuteur. Les picots 3 s'enclenchent à travers le fermoir par blocage de leur face à la base du tronc de cône qu'ils possèdent en commun avec la protubérance d'appui sur le végétal qu'ils complètent. Ils assurent le verrouillage en empêchant la bande centrale du collier de sortir de l'encoche 7, du fait que la portée plane qui les limite sur la face externe 10 de la bande vient en butée sur la lèvre 8.

Une autre lumière 5 de passage du collier est ménagée à travers la plaque 4 du fermoir F. Elle est située en position proximale, en arrière de la lumière distale 6 par rapport à l'extrémité libre du collier. Sa forme et ses dimensions sont analogues à celles de la lumière distale 6, sauf qu'elle est disposée symétriquement opposée sur l'axe du collier, comme on le voit clairement sur les figures. Par contre, on ne trouve pas d'encoche à ce niveau, de sorte que l'on n'a aucune difficulté à faire coulisser la bande centrale avec ses protubérances et ses picots à travers le fermoir et qu'elle passe librement à travers la lumière proximale 6.

Conformément à l'invention en son mode de réalisation illustré par les figures, la mise en place du collier 1 autour du tronc d'arbre V et de son tuteur T s'effectue par passage successif de l'extrémité libre de la bande B, opposée à l'extrémité munie du fermoir F, au travers respectivement de la lumière de passage libre 5 puis de la lumière de blocage 6, de telle manière que le collier forme finalement une double boucle en 8 dont une première boucle enserre le végétal et dont la seconde boucle enserre le tuteur T (voir figure 4). La disposition en opposition des lumières 5 et 6 trouve ici tout son intérêt pour la formation des deux boucles. La fermeture du collier 1 se produit par l'engagement de la section de la bande B dans l'encoche 7 prolongeant la lumière distale 6 en amont d'un couple de deux picots latéraux. Elle est suivie du verrouillage du collier 1 par le fait par le dos de ces picots la bande se coince contre la lèvre de verrouillage 8.

Une fois ainsi mis en place, le collier de tuteurage tel que décrit fonctionne de manière auto-extensible au cours de la croissance de l'arbre. Il évolue naturellement sous la contrainte de la croissance en diamètre du tronc qu'il entoure par sa première boucle. Cette capacité lui vient du matériau qui le constitue. Ce matériau est choisi hygroscopique et entièrement biodégradable. Il est essentiellement issu de substances végétales sans adjonction d'hydrocarbures d'origine pétrolière. Le collier se déforme par allongement plastique sous les effets combinés de l'absorption d'eau et de la contrainte mécanique exercée par l'arbre. Au fil du temps, sous l'effet des pluies et des arrosages éventuels, le collier selon l'invention devient plus ductile, et, le tronc grossissant, il s'allonge. Il résulte aussi de la configuration du fermoir que les protubérances de face interne peuvent successivement s'engager en retour au travers de la lumière proximale, alors même que le collier reste fermé au niveau de la lumière distale. Le collier évolue ainsi au fur et à mesure que le végétal croît, et ce sans qu'il soit nécessaire d'intervenir pour relâcher ou repositionner ledit collier. Une fois que par la dégradation progressive de ses propriétés mécaniques le collier atteint la limite de déformation plastique, il se détache naturellement et tombe au sol où il est ensuite dégradé en quelques semaines par les micro-organismes qui y prolifèrent.

L'invention permet donc, comme il a été décrit, de réaliser un dispositif de tuteurage simple, léger, totalement biodégradable, et auto-évolutif avec la croissance du végétal.

## Revendications

1. Collier de tuteurage végétal, essentiellement constitué par une bande flexible (B) qui est pourvue de picots (3) régulièrement répartis sur sa longueur pour s'enclencher dans un fermoir (F) prévu à une extrémité de ladite bande de manière à maintenir ladite bande fermée en boucle sur elle-même, **caractérisé en ce** ladite bande est réalisée en un matériau hygroscopique dont les qualités mécaniques de résistance à l'élongation se dégradent progressivement lorsqu'il est utilisé exposé aux intempéries ou à des conditions atmosphériques similaires, de sorte qu'il se comporte comme un collier auto-extensible avec la croissance du végétal qu'il enserre.

2. Collier selon la revendication 1, **caractérisé en que** ladite bande est pourvue de protubérances (2) qui sont réparties sur sa longueur sur une face interne (11) d'enserrement d'un végétal à lier à un tuteur, contrairement à une face externe opposée (10) qui est lisse.

3. Collier selon la revendication 2, **caractérisé en ce que** lesdites protubérances présentent un profil semi-conique dont la section va en décroissant vers l'extrémité libre de la bande située à l'opposé du fermoir.

4. Collier selon la revendication 1, 2, ou 3, **caractérisé en ce que** lesdits picots d'enclenchement dans le fermoir (3) sont formés dans la masse de ladite bande (B) sur les bords latéraux de celle-ci.

5. Collier selon la revendication 4, **caractérisé en ce que** lesdits picots (3) sont ménagés en prolongement de chacune des protubérances de la face interne, symétriquement de chaque côté de la bande, et en que l'ensemble de deux picots avec chaque protubérance (2) présente un demi tronc de cône dont la base est dirigée vers le fermoir.

6. Collier suivant l'une quelconque des revendications précédentes, **caractérisé en ce que** ledit fermoir (F) est réalisé intégré dans la même matière que la bande flexible, à une extrémité de celle-ci, sa forme lui conférant une rigidité moins fragile sous les intempéries.

7. Collier selon l'une quelconque des revendications précédentes, **caractérisé en ce que** ledit fermoir (F) comporte une lèvre de verrouillage (8) qui permet de bloquer la bande du collier dans une encoche réceptrice prolongeant axialement une lumière distale (6) du fermoir à travers laquelle on peut engager le collier par son extrémité libre, ladite lèvre étant formée en travers du collier à la base de ladite encoche, pour former butée pour une portée plane que lesdits picots présentent dans le plan longitudinal de la bande.

8. Collier selon l'une quelconque des revendications précédentes, **caractérisé en ce que** ledit fermoir (F) comporte des moyens coopérant avec lesdits picots pour favoriser une fermeture du collier en double bouclé, avec une première boucle d'enserrement d'un végétal à soutenir jusqu'à une lumière proximale (5) livrant libre passage à travers le fermoir à la bande munie de ses picots et de ses protubérances éventuelles suivant la revendication 2 et ses revendications secondaires, et une seconde boucle d'enserrement d'un tuteur de soutien dudit végétal entre ladite lumière proximale et une lumière distale (6) du fermoir de passage de l'extrémité libre du collier au-delà de laquelle le collier se bloque par butée des picots sur le fermoir au niveau d'une encoche (7) accueillant seulement la partie courante de la bande centrale dépourvue de picots et de protubrances éventuelles.

9. Collier selon la revendication 8, **caractérisé en ce que** ladite lumière distale (6) et ladite lumière proximale (5) présentent des formes semi-circulaires en correspondance avec des protubérances de face interne (2) réalisées conformément à la revendication 5 chacune avec deux picots latéraux (3) sur chacune des faces latérales de ladite bande (B); lesdites lumières étant disposées symétriquement opposées.

10. Collier selon la revendication 8 ou 9, **caractérisé en ce que** ledit fermoir (F) comporte une lèvre de verrouillage (8) réalisée en conformité avec la revendication 7.
